# FASCICULE DE BREVET EUROPEEN

(11) **EP 3 685 087 B1**
(45) Date de publication et mention de la délivrance du brevet: **08.12.2021**
(21) Numéro de dépôt: 18785829.5
(22) Date de dépôt: 21.09.2018
(51) Int. Cl.: F16L 21/02, F16L 21/08, F16L 41/08

(54) **PROCÉDÉ DE DÉTECTION DE FUITE DANS UN SYSTÈME DE CONNEXION ENTRE UN ORGANE DE DISTRIBUTION ET UN ORGANE DE RÉCEPTION**
VERFAHREN ZUR DETEKTION EINES LECKS IN EINEM VERBINDUNGSSYSTEM ZWISCHEN EINEM AUSGABEELEMENT UND EINEM AUFNAHMEELEMENT
METHOD FOR DETECTING A LEAK IN A CONNECTION SYSTEM BETWEEN A DISPENSING MEMBER AND A RECEIVING MEMBER

(30) Priorité: 21.09.2017 FR 1758733
(43) Date de publication de la demande: 29.07.2020
(73) Titulaire: Safran Power Units, 31200 Toulouse (FR)
(72) Inventeur: STEPHAN, Rémi, 77550 Moissy-Cramayel (FR); BARON, Matthieu, 77550 Moissy-Cramayel (FR); HORDE, Théophile, 77550 Moissy-Cramayel (FR)
(74) Mandataire: Argyma
(86) Numéro de dépôt international: PCT/EP2018/075659
(87) Numéro de publication internationale: WO 2019/057922

(56) Documents cités:
- EP-A1- 1 950 547
- EP-A2- 2 505 982
- CN-A- 106 499 893
- DE-A1-102008 012 739
- US-A1- 2005 046 180
- US-A1- 2010 269 956

## Description

### DOMAINE TECHNIQUE GENERAL ET ART ANTERIEUR

La présente invention concerne le domaine de la détection de fuite dans un système de connexion entre un organe de distribution et un organe de réception de gaz, en particulier, pour la détection de fuite d'hydrogène dans une pile à combustible pour une application aéronautique.

De manière connue, une pile à combustible permet de produire de l'énergie électrique à partir d'hydrogène et d'air. L'hydrogène est un gaz hautement inflammable et explosif. Il est généralement conditionné dans un réservoir à haut pression et doit être détendu avant d'être utilisé.

Une pile à combustible comporte des capteurs de détection de fuite d'hydrogène qui sont adaptés pour fermer le réservoir d'hydrogène en cas de fuite et mettre l'ensemble en sécurité. Lorsque l'hydrogène est conditionné à haute pression, une quantité importante d'hydrogène est susceptible de s'échapper dans un temps très bref. Compte tenu du délai de réaction des capteurs de détection, la concentration en hydrogène dans l'air ambiant peut augmenter très rapidement et former une atmosphère explosive avant que les capteurs de détection n'aient pu émettre la moindre alarme. Dans le cadre de l'utilisation d'une pile à combustible aéronautique, c'est-à-dire embarquée dans un aéronef, de tels inconvénients ne sont pas acceptables.

Une solution immédiate pour éliminer ces inconvénients serait d'améliorer le délai de réaction des capteurs de détection. Néanmoins, aucun capteur de détection ne répond actuellement aux contraintes de sécurité pour une utilisation aéronautique.

L'invention a donc pour but de remédier à ces inconvénients en proposant un nouveau procédé qui permette de détecter une fuite de manière sécurisée. Bien que l'invention soit née à l'origine pour résoudre un problème relatif à une fuite d'hydrogène, elle peut s'appliquer à tout type de gaz.

Le document DE 102008012739 A1 divulgue un procédé de détection de fuite dans un raccord à brides, dans lequel un capteur de pression réagit à la pression d'une chambre annulaire entre deux joints concentriques, une alarme de fuite est émise lors d'une chute de pression ou d'une augmentation de pression dans la chambre franchissant une valeur seuil. Ce document montre en outre plusieurs raccords successifs dont les chambres de contrôle de pression sont reliées en série.

Les documents EP 1950547 A1 et CN 106499893 A divulguent chacun un procédé de détection de fuite également dans un raccord à brides, dans lequel un capteur de pression réagit à la pression d'une chambre annulaire entre deux joints concentriques, une alarme de fuite est émise lors d'une augmentation de pression dans la chambre franchissant une valeur seuil.

### PRESENTATION GENERALE DE L'INVENTION

L'invention concerne un procédé selon la revendication 1.

L'invention utilise un système de connexion, de raccordement, qui comporte:
- des premiers moyens d'étanchéité et des deuxièmes moyens d'étanchéité disposés à l'interface entre les premiers moyens de connexion de l'organe de distribution et les deuxièmes moyens de connexion de l'organe de réception pour permettre une coopération étanche redondée entre l'organe de distribution et l'organe de réception,
- une enceinte de contrôle définie entre les premiers moyens d'étanchéité et les deuxièmes moyens d'étanchéité, la pression par défaut dans l'enceinte de contrôle étant inférieure à la deuxième pression dudit deuxième environnement et
- des moyens de mesure de la pression courante dans l'enceinte de contrôle de manière à détecter une fuite de gaz.

Grâce à l'invention, un défaut des premiers moyens d'étanchéité ou des deuxièmes moyens d'étanchéité n'est pas problématique étant donné que l'étanchéité est redondée. L'étanchéité est assurée par les premiers moyens d'étanchéité lorsque les deuxièmes moyens d'étanchéité sont défectueux et réciproquement. Outre cette protection qui évite la formation d'une atmosphère explosive, la mesure de la pression courante dans l'enceinte de contrôle permet de détecter une fuite des premiers moyens d'étanchéité ou des deuxièmes moyens d'étanchéité même si cette dernière est contenue. Ainsi, une étape de maintenance peut être réalisée avant l'apparition du moindre inconvénient de manière préventive et réactive. La fiabilité d'une telle connexion est accrue, ce qui améliore la sécurité. En outre, la masse et l'encombrement du système de connexion ne sont que faiblement impactés.

De manière préférée, le deuxième environnement est l'environnement ambiant à une pression ambiante.

Un tel système de connexion est particulièrement adapté pour distribuer un gaz inflammable et à haute pression tel que de l'hydrogène.

De manière préférée, le système de connexion comportant des moyens de surveillance, les moyens de surveillance sont configurés pour émettre une alarme de défaut lorsque la pression courante de l'enceinte de contrôle est supérieure à la pression de défaut. En effet, étant donné que la pression de défaut dans l'enceinte de contrôle est inférieure à la première pression du premier environnement et à la deuxième pression du deuxième environnement, toute fuite se traduit par une augmentation de pression de l'enceinte de contrôle. Par simple surveillance de la pression de l'enceinte de contrôle, on peut détecter une fuite des moyens d'étanchéité.

De préférence encore, le système de connexion comportant des moyens de surveillance, les premiers moyens d'étanchéité étant en contact avec le premier environnement, les moyens de surveillance sont configurés pour émettre une alarme de défaut des premiers moyens d'étanchéité lorsque la pression courante de l'enceinte de contrôle est supérieure à la deuxième pression. En effet, la pression de l'enceinte de contrôle se rapproche de la pression de l'environnement d'où est originaire la fuite. Un tel système de connexion permet non seulement de détecter une fuite mais permet également de déterminer l'origine de la fuite, ce qui est très avantageux pour réaliser des opérations de maintenance.

Le procédé selon l'invention peut en outre mettre en œuvre un ensemble comportant une pluralité de systèmes de connexion, tels que présentés précédemment, chaque système de connexion comportant une enceinte de contrôle, les enceintes de contrôle pouvant être reliées fluidiquement entre elles afin de former une enceinte de contrôle globale. De manière avantageuse, plusieurs enceintes de contrôle peuvent être mutualisées ensemble afin de limiter l'encombrement global de l'ensemble des systèmes de connexion, en particulier, lorsque ceux-ci sont proches les uns des autres et/ou appartiennent à un même équipement.

De manière préférée, l'ensemble comprend uniquement un dispositif de mesure dans l'enceinte de contrôle globale. Avantageusement, un unique dispositif de mesure peut être mutualisé entre plusieurs systèmes de connexion, ce qui limite l'encombrement et le coût global.

L'invention peut aussi mettre en œuvre un ensemble d'un réservoir de gaz et d'un dispositif mécanique connecté audit réservoir de gaz par au moins un système de connexion tel que présenté précédemment. L'utilisation d'un système de connexion avec un réservoir de gaz pour le montage d'un capteur ou d'une tête de distribution est particulièrement avantageuse étant donné qu'un tel système de connexion limite le risque de fuite d'un gaz haute pression susceptible de former une atmosphère explosive de manière rapide.

L'invention concerne également une pile à combustible comportant un ensemble d'un réservoir d'hydrogène et d'un dispositif mécanique tel que présenté précédemment et une utilisation d'une telle pile à combustible dans un aéronef. Une application de l'invention à une pile à hydrogène avec un gaz hautement inflammable et à haute pression permet d'augmenter la fiabilité et la sécurité, ce qui rend compatible l'utilisation d'une pile à combustible dans le domaine aéronautique.

Comme indiqué précédemment, la simple mesure d'un écart de pression permet de détecter une fuite. Le procédé de détection selon l'invention est avantageux étant donné que la fuite est détectée tout en étant contenue par les moyens d'étanchéité redondés. Une telle détection est préventive.

De préférence, les premiers moyens d'étanchéité étant en contact avec le premier environnement, le procédé comporte une étape d'émission d'une alarme de fuite des premiers moyens d'étanchéité si la pression courante dans l'enceinte de contrôle est supérieure à la deuxième pression du deuxième environnement.

De préférence encore, les deuxièmes moyens d'étanchéité étant en contact avec le deuxième environnement, le procédé comporte une étape d'émission d'une alarme de fuite des deuxièmes moyens d'étanchéité si la pression courante dans l'enceinte de contrôle est, d'une part, supérieure à la pression de défaut et, d'autre part, inférieure ou égale à la deuxième pression du deuxième environnement.

Le procédé de détection permet de détecter une fuite mais également de déterminer l'origine de la fuite, ce qui facilite la maintenance.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un ensemble mis en œuvre par l'invention comportant un réservoir d'hydrogène associé à un dispositif de détente,
- la figure 2 est une représentation schématique d'un système de connexion entre un organe de distribution et un organe de réception selon une forme de réalisation de l'invention, l'organe de réception étant en contact avec l'environnement ambiant,
- la figure 3 est une représentation schématique rapprochée de l'interface entre l'organe de distribution et l'organe de réception de la figure 2,
- la figure 4 est une représentation schématique rapprochée d'un exemple de réalisation structurelle d'un organe de distribution et d'un organe de réception d'un système de connexion selon l'invention, et
- la figure 5 est une représentation schématique d'une détection mutualisée de fuite sur plusieurs systèmes de connexion.

Il faut noter que les figures exposent des éléments structurels de l'invention de manière détaillée pour mettre en œuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

L'invention va être présentée pour une pile à combustible dans une application aéronautique.

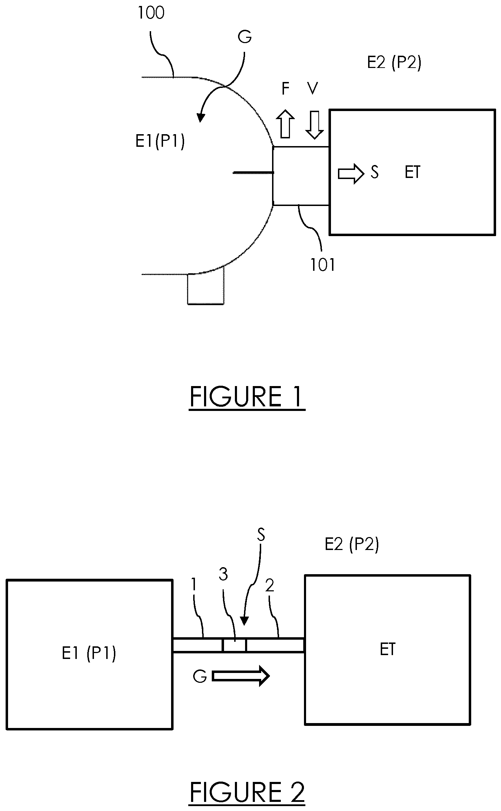

Dans cet exemple, en référence à la figure 1, la pile à combustible comporte un réservoir de gaz hydrogène 100 qui est conditionné à une première pression de gaz P1. Le réservoir 100 est équipé d'un dispositif de détente 101 dits «tête de bouteille intégrée» qui comporte un détendeur afin de diminuer la première pression P1 lors d'une distribution. Le dispositif de détente 101 est baigné dans un deuxième environnement E2 à une deuxième pression P2. Dans cet exemple, le deuxième environnement E2 est l'environnement ambiant et la deuxième pression P2 est la pression ambiante.

Le dispositif de détente 101 est relié directement au niveau de la sortie du réservoir 100, ce qui évite de recourir à des canalisations dans lesquelles circule de l'hydrogène à haute pression. En effet, la présence de canalisations augmente le risque de fuite associé auxdites canalisations tuyauteries (chocs, vibrations, erreurs de maintenance, fuite aux interfaces, etc.). De manière connue, en référence à la figure 1, un tel dispositif de détente 101 permet un remplissage F, une purge V, une distribution S dans un environnement de travail ET et autre. La structure générale d'un dispositif de détente 101 est connue de l'homme du métier et ne sera pas présentée plus en détails. Un tel dispositif de détente 101 comporte de manière connue une pluralité de systèmes de connexion étanches entre un organe de distribution relié à un environnement « haute pression» et un organe de réception, en contact avec le l'environnement ambiant, afin de conduire le gaz G et le détendre.

L'invention va être présentée pour un système de connexion d'un dispositif de détente 101 mais il va de soi que l'invention s'applique à toute connexion entre un organe de distribution et un organe de réception.

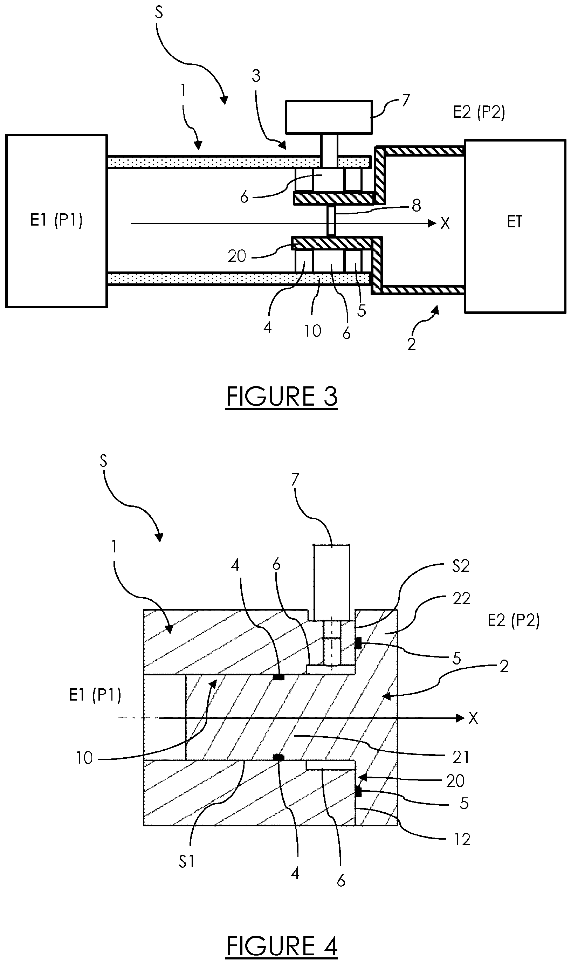

De manière connue, en référence à la figure 2, un système de connexion S comporte un organe de distribution 1 relié fluidiquement à un premier environnement E1 comportant un gaz G ayant une première pression P1. Dans cet exemple, l'organe de distribution 1 est relié fluidiquement à un environnement d'hydrogène à haute pression, c'est-à-dire, à une première pression P1 supérieure à 1 MPa, de préférence, comprise entre 5 MPa et 100 MPa. Le système de connexion S comporte en outre un organe de réception 2 qui est relié fluidiquement à un environnement de travail ET dans lequel est utilisé le gaz G. L'organe de réception 2 est en contact avec un deuxième environnement E2 ayant une deuxième pression P2 inférieure à la première pression P1 du gaz G. Comme indiqué précédemment, le deuxième environnement E2 est l'environnement ambiant et la deuxième pression P2 est la pression ambiante. L'organe de distribution 1 et l'organe de réception 2 sont connectés ensemble au niveau d'une zone d'interface 3 représentée de manière fonctionnelle à la figure 3.

Dans cet exemple, en référence à la figure 3, l'organe de distribution 1 se présente sous la forme d'une conduite tubulaire s'étendant axialement selon un axe X orienté d'amont en aval. Dans cet exemple, l'organe de réception 2 se présente sous la forme d'une conduite tubulaire s'étendant axialement selon un axe X orienté d'amont en aval. L'organe de réception 2 est configuré pour s'insérer partiellement dans l'organe de distribution 1 afin de permettre une distribution de gaz G depuis l'organe de distribution 1 vers l'organe de réception 2.

Comme illustré à la figure 3, l'extrémité aval de l'organe de distribution 1 forme des premiers moyens de connexion 10 tandis que l'extrémité amont de l'organe de réception 2 forme des deuxièmes moyens de connexion 20. Les deuxièmes moyens de connexion 20 de l'organe de réception 2 coopèrent mécaniquement avec les premiers moyens de connexion 10 de l'organe de distribution 1 de manière à permettre la distribution de gaz G de l'organe de distribution 1 vers l'organe de réception 2. Il va de soi que la forme et la structure de l'organe de distribution 1 et de l'organe de réception 2 pourraient être différentes en fonction de la nature de la connexion.

Selon l'invention, en référence à la figure 3, le système de connexion S comporte des premiers moyens d'étanchéité 4 et des deuxièmes moyens d'étanchéité 5 disposés à l'interface entre les premiers moyens de connexion 10 de l'organe de distribution 1 et les deuxièmes moyens de connexion 20 de l'organe de réception 2 pour permettre une coopération étanche redondée entre l'organe de distribution 1 et l'organe de réception 2. En effet, la disposition « en série » des moyens d'étanchéité 4, 5 permet de redonder l'étanchéité. Si les premiers moyens d'étanchéité 4 sont défectueux, l'étanchéité est assurée par les deuxièmes moyens d'étanchéité 5. Une telle redondance permet de limiter de manière importante le risque de fuite étant donné que les moyens d'étanchéité sont déjà, en tant que tel, très fiables.

Dans cet exemple, les moyens d'étanchéité 4, 5 se présentent sous la forme de joints annulaires mais il va de soi qu'ils pourraient être de formes différentes, en particulier, de forme torique ou plate. Comme illustré à la figure 3, les premiers moyens d'étanchéité 4 sont positionnés en amont des deuxièmes moyens d'étanchéité 5. Les premiers moyens d'étanchéité 4 sont en contact avec le premier environnement E1 tandis que les deuxièmes moyens d'étanchéité 5 sont en contact avec le deuxième environnement E2, ici, l'environnement ambiant.

Le système de connexion S comporte en outre une enceinte de contrôle 6 appelée également « cavité inter-joint », définie entre les premiers moyens d'étanchéité 4 et les deuxièmes moyens d'étanchéité 5, et des moyens de mesure 7 de la pression courante Pc dans l'enceinte de contrôle 6. L'enceinte de contrôle 6 se présente dans cet exemple sous la forme d'un anneau mais il va de soi que sa forme pourrait être différente.

Dans cet exemple, les moyens de mesure 7 de la pression courante Pc se présentent sous la forme d'un capteur de pression mais il va de soi que cela pourrait être différent, notamment, un dispositif de mesure mécanique.

Comme cela sera présenté par la suite, la pression par défaut Pd dans l'enceinte de contrôle 6 est inférieure à la deuxième pression P2 dudit deuxième environnement E2 (pression ambiante) de manière à assurer une augmentation de la pression courante Pc dans l'enceinte de contrôle 6 en cas de fuite. En effet, le volume de l'enceinte de contrôle 6 est faible et la pression courante Pc dans l'enceinte de contrôle 6 tend à s'égaliser avec la pression de l'environnement d'où est originaire la fuite.

De préférence, lors de la connexion de l'organe de distribution 1 avec l'organe de réception 2, la pression courante Pc dans l'enceinte de contrôle 6 est abaissée au moyen d'une pompe à vide afin d'atteindre la pression par défaut Pd désirée, par exemple, une pression inférieure à la pression ambiante dans laquelle le système de connexion S est utilisé.

En effet, l'enceinte de contrôle 6 est étanche étant donné qu'elle est bornée par les premiers moyens d'étanchéité 4 et les deuxièmes moyens d'étanchéité 5. Aussi, en fonctionnement normal, la pression courante Pc reste constante au cours du temps dans l'enceinte de contrôle 6. En cas de fonctionnement dégradé lors d'une fuite d'un des moyens d'étanchéité 4, 5, les moyens de mesure 7 permettent de détecter une augmentation de la pression constante Pc et, par ailleurs, de déterminer les moyens d'étanchéité 4, 5 qui sont défectueux.

En cas de fuite des premiers moyens d'étanchéité 4, la pression courante Pc augmente dans l'enceinte étanche 6 étant donné que le premier environnement E1 rempli de gaz G possède une pression supérieure à la pression de défaut Pd de l'enceinte de contrôle 6 (P1≥Pc >P2>Pd). La pression courante Pc mesurée par les moyens de mesure 7 dépasse la deuxième pression P2 et se rapproche de la première pression P1, ce qui indique que les moyens d'étanchéité en contact avec le premier environnement E1 sont défectueux, c'est-à-dire, les premiers moyens d'étanchéité 4.

De manière analogue, en cas de fuite des deuxièmes moyens d'étanchéité 5, la pression courante Pc augmente dans l'enceinte étanche 6 étant donné que le deuxième environnement E2 possède une pression supérieure à la pression de défaut Pd de l'enceinte de contrôle 6 (P1>P2≥Pc>Pd). La pression courante Pc mesurée par les moyens de mesure 7 se rapproche de la deuxième pression P2, ce qui indique que les moyens d'étanchéité en contact avec le deuxième environnement E2 sont défectueux, c'est-à-dire, les deuxièmes moyens d'étanchéité 5. Grâce à l'invention, l'origine de la fuite peut être détectée de manière préventive afin de réaliser une étape de maintenance.

Selon un aspect, en référence à la figure 3, l'organe de réception 2 comporte des moyens d'ouverture 8 permettant de mettre en relation fluidique le premier environnement E1 avec l'environnement de travail ET et ainsi permettre une distribution de gaz G depuis l'organe de distribution 1 vers l'organe de réception 2. Il va de soi que les moyens d'ouverture 8 pourraient également appartenir à l'organe de distribution 1.

Selon un autre aspect, en référence à la figure 3, l'organe de réception 2 se présente sous la forme d'un bouchon de l'organe de distribution 1 qui est baigné dans le deuxième environnement E2, ici, l'environnement ambiant. L'organe de réception 2 peut posséder par exemple une fonction de capteur.

De manière préférée, le système de connexion S comporte des moyens de surveillance (non représentés) configurés pour émettre une alarme visuelle, sonore, informatique, électrique ou autre en cas d'écart de la pression courante Pc par rapport à la pression par défaut Pd. En particulier, les moyens de surveillance sont configurés pour émettre une alarme de défaut lorsque la pression courante de l'enceinte de contrôle est supérieure à la pression de défaut Pd. Les moyens de surveillance sont également configurés pour émettre une alarme de défaut des premier moyens d'étanchéité 4 lorsque la pression courante Pc de l'enceinte de contrôle 6 dépasse la deuxième pression P2 et se rapproche de la première pression P1. Un tel système de connexion permet non seulement de détecter une fuite mais permet également de déterminer l'origine de la fuite, ce qui est très avantageux pour réaliser des opérations de maintenance.

Une forme structurelle particulière du système de connexion S est représentée à la figure 4. L'organe de distribution 1 se présente sous la forme d'une conduite tubulaire s'étendant axialement selon un axe X orienté d'amont en aval. L'organe de réception 2 se présente sous la forme d'un insert 21 adapté pour s'insérer selon l'axe X dans la conduite tubulaire dont l'organe de distribution 1 a la forme. L'organe de réception 2 comporte en outre une base 22 s'étendant orthogonalement à l'insert 21 et adaptée pour venir en butée selon l'axe X avec l'extrémité aval de l'organe de distribution 1.

L'organe de réception 2 est en contact avec le deuxième environnement E2, c'est-à-dire, l'environnement ambiant. Comme illustré à la figure 4, la connexion entre l'organe de distribution 1 et l'organe de réception 2 définit une première surface de connexion amont S1, parallèle à l'axe X, et une deuxième surface de connexion aval S2, orthogonale à l'axe X. Les premiers moyens d'étanchéité 4 et les deuxièmes moyens d'étanchéité 5 sont disposés à l'interface entre les premiers moyens de connexion 10 de l'organe de distribution 1 et les deuxièmes moyens de connexion 20 de l'organe de réception 2 et sont respectivement positionnés au niveau de la première surface de connexion amont S1 et de la deuxième surface de connexion aval S2. L'enceinte de contrôle 6 se présente sous la forme d'une gorge cylindrique qui est reliée aux moyens de mesure 7. Un tel système de connexion S possède un encombrement réduit et une fiabilité accrue.

Il va être dorénavant présenté un exemple de mise en œuvre d'une détection de fuite dans un système de connexion S tel que présenté précédemment. Lors de l'installation, l'organe de distribution 1 et l'organe de réception 2 sont connectés de manière étanche grâce aux moyens d'étanchéités 4, 5. La pression courante Pc de l'enceinte de contrôle 6 est abaissée à une pression de défaut Pd qui est inférieure à la première pression P1 du premier environnement E1 et à la deuxième pression P2 du deuxième environnement E2. Dans cet exemple de mise en œuvre, la pression par défaut Pd est égale à 1 Pa tandis que la première pression P1 est de 35 MPa et que la deuxième pression P2 est la pression ambiante égale à 0,1 MPa. Il va de soi que la pression ambiante varie dans un contexte aéronautique. A titre d'exemple, la pression ambiante peut être faible, en particulier, de l'ordre de 20 kPa dans une zone non pressurisée d'un avion.

En l'absence de fuite, les moyens de mesure Pc mesurent une pression courante Pc qui est constante et égale à la pression par défaut Pd.

Comme indiqué précédemment, en cas de fuite des premiers moyens d'étanchéité 4, la pression courante Pc augmente dans l'enceinte étanche 6. Le gaz G commence à remplir progressivement l'enceinte de contrôle 6. La pression courante Pc mesurée par les moyens de mesure 7 augmente pour dépasser la valeur de la deuxième pression P2 (pression ambiante) et approcher la valeur de la première pression P1, ce qui indique que les premiers moyens d'étanchéité 4 sont défectueux. Une alarme est alors émise afin d'avertir les opérateurs qu'une maintenance est nécessaire. De manière avantageuse, par la connaissance de la valeur de la pression courante Pc, les opérateurs peuvent déterminer quels sont les moyens d'étanchéité à remplacer.

La présence de deuxièmes moyens d'étanchéité 5 permet de redonder les premiers moyens d'étanchéité 4 et de confiner le gaz G dans l'enceinte de contrôle 6. Aussi, il n'existe pas de risque de créer une atmosphère explosive, la fuite étant avantageusement contenue. La fiabilité du système de connexion S est augmentée de manière significative, ce qui limite le risque relatif à la sécurité et rend possible l'usage d'une pile à combustible dans un aéronef. Une détection similaire est réalisée en cas de défaut des deuxièmes moyens d'étanchéité 5. Dans ce cas, la pression courante PC est supérieure à la pression de défaut Pd mais inférieure ou égale à la deuxième pression P2 (pression ambiante).

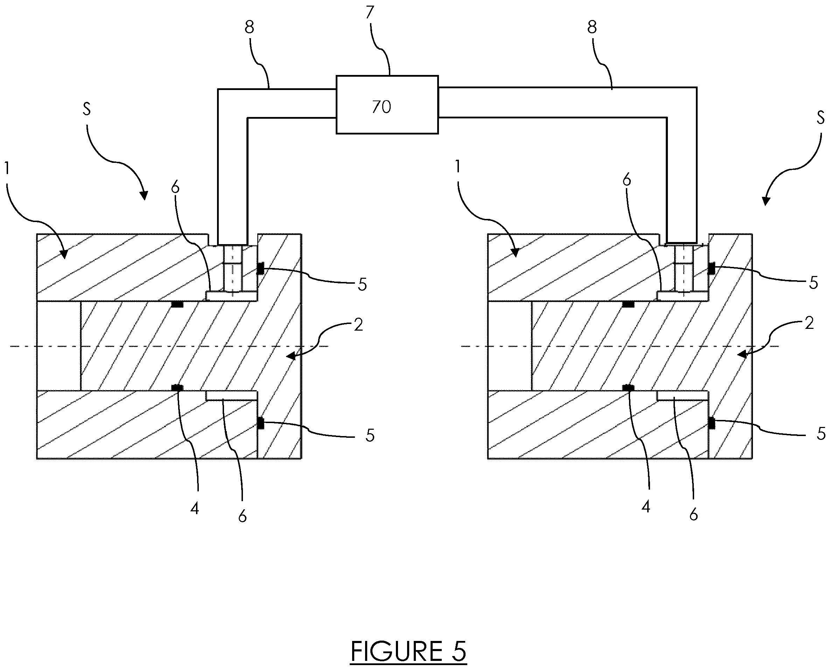

De manière avantageuse, en référence à la figure 5, les moyens de mesure 7 sont mutualisés entre plusieurs systèmes de connexion S. Ainsi, les enceintes de contrôle 6 des systèmes de connexion S sont reliés fluidiquement ensemble, par exemple au moyen de canalisations 8, afin de former une enceinte de contrôle globale à laquelle sont reliés les moyens de mesure 7. Une telle mutualisation permet d'éviter l'utilisation de multiples moyens de mesure 7. Aussi, de préférence, un unique dispositif de mesure 70 est utilisé pour surveiller la pression courante Pc dans l'enceinte de contrôle globale. Une telle forme de réalisation permet de limiter l'encombrement et le coût. Cela est particulièrement avantageux pour une pile à combustible et/ou un dispositif de détente comportant une pluralité de systèmes de connexion S proches les uns des autres.

L'invention a été présentée pour une pile à combustible dans une application aéronautique mais il va de soi que l'invention s'applique également dans d'autres domaines, en particulier, le domaine du transport terrestre, maritime ou ferroviaire. De même, l'invention s'applique à toute connexion d'un organe de distribution «haute pression » à un organe de réception en contact avec un environnement ayant une pression plus faible.

## Revendications

1. Procédé de détection de fuite dans un système de connexion (S) comportant :
- un organe de distribution (1) relié fluidiquement à un premier environnement (E1) comportant un gaz (G) ayant une première pression (P1), l'organe de distribution (1) comportant des premiers moyens de connexion (10),
- un organe de réception (2) en contact avec un deuxième environnement (E2) ayant une deuxième pression (P2) inférieure à la première pression (P1) du gaz (G), l'organe de réception (2) comportant des deuxièmes moyens de connexion (20) coopérant mécaniquement avec les premiers moyens de connexion (10) de l'organe de distribution (1),
- des premiers moyens d'étanchéité (4) et des deuxièmes moyens d'étanchéité (5) disposés à l'interface entre les premiers moyens de connexion (10) de l'organe de distribution (1) et les deuxièmes moyens de connexion (20) de l'organe de réception (2) pour permettre une coopération étanche redondée entre l'organe de distribution (1) et l'organe de réception (2),
- une enceinte de contrôle (6) définie entre les premiers moyens d'étanchéité (4) et les deuxièmes moyens d'étanchéité (5), la pression par défaut (Pd) dans l'enceinte de contrôle (6) étant inférieure à la deuxième pression (P2) dudit deuxième environnement (E2) et
- des moyens de mesure (7) de la pression courante (Pc) dans l'enceinte de contrôle (6) de manière à détecter une fuite de gaz (G),
- des moyens de surveillance
le procédé comportant :
- une étape de mesure de la pression courante (Pc) de l'enceinte de contrôle (6), et
- les premiers moyens d'étanchéité (4) étant en contact avec le premier environnement (E1), une étape d'émission d'une alarme de fuite des premiers moyens d'étanchéité (4) si la pression courante (Pc) dans l'enceinte de contrôle (6) est supérieure à la deuxième pression (P2) du deuxième environnement (E2), l'étanchéité étant assurée par les deuxièmes moyens d'étanchéité (5).

2. Procédé de détection de fuite selon la revendication 1, dans lequel le gaz (G) est de l'hydrogène.

3. Procédé de détection de fuite selon l'une des revendications 1 à 2 dans un ensemble comportant une pluralité de systèmes de connexion (S), chaque système de connexion (S) comportant une enceinte de contrôle (6), les enceintes de contrôle (6) sont reliées fluidiquement entre elles afin de former une enceinte de contrôle globale.

4. Procédé de détection de fuite selon la revendication 3 comprenant uniquement un dispositif de mesure dans l'enceinte de contrôle globale.

5. Procédé de détection de fuite selon l'une des revendications 1 à 3 dans un système de connexion (S) connectant un réservoir de gaz (100) et un dispositif mécanique (101).

6. Procédé de détection de fuite selon la revendication 5 dans un système de connexion (S) connectant un réservoir de d'hydrogène (100) et un dispositif mécanique (101) d'une pile à combustible.

7. Procédé de détection de fuite selon la revendication 6 dans un système de connexion (S) connectant un réservoir de d'hydrogène (100) et un dispositif mécanique (101) d'une pile à combustible montée dans un aéronef.

## Patentansprüche

1. Verfahren zur Detektion eines Lecks in einem Verbindungssystem (S), aufweisend:
- ein Verteilerorgan (1), das mit einer ersten Umwelt (E1) fluidisch verbunden ist, aufweisend ein Gas (G) mit einem ersten Druck (P1), wobei das Verteilerorgan (1) erste Verbindungsmittel (10) aufweist,
- ein Empfangsorgan (2) im Kontakt mit einer zweiten Umwelt (E2) mit einem zweiten Druck (P2), der niedriger als der erste Druck (P1) des Gases (G) ist, wobei das Empfangsorgan (2) zweite Verbindungsmittel (20) aufweist, die mit den ersten Verbindungsmitteln (10) des Verteilerorgans (1) mechanisch zusammenwirken,
- erste Dichtungsmittel (4) und zweite Dichtungsmittel (5), die an der Schnittstelle zwischen den ersten Verbindungsmitteln (10) des Verteilerorgans (1) und den zweiten Verbindungsmitteln (20) des Empfangsorgans (2) angeordnet sind, um ein redundantes dichtes Zusammenwirken zwischen dem Verteilerorgan (1) und dem Empfangsorgan (2) zu gestatten,
- einen Kontrollraum (6), der zwischen den ersten Dichtungsmitteln (4) und den zweiten Dichtungsmitteln (5) definiert ist, wobei der Standard-Druck (Pd) im Kontrollraum (6) niedriger als der zweite Druck (P2) der zweiten Umwelt (E2) ist, und
- Messmittel (7) des laufenden Drucks (Pc) im Kontrollraum (6) derart, dass ein Leck eines Gases (G) detektiert wird,
- Überwachungsmittel,
wobei das Verfahren aufweist:
- einen Messschritt des laufenden Drucks (Pc) des Kontrollraums (6), und
- wobei die ersten Dichtungsmittel (4) mit der ersten Umwelt (E1) im Kontakt sind, einen Sendeschritt einer Warnung vor einem Leck der ersten Dichtungsmittel (4), wenn der laufende Druck (Pc) im Kontrollraum (6) höher als der zweite Druck (P2) der zweiten Umwelt (E2) ist, wobei die Dichtigkeit von den zweiten Dichtungsmitteln (5) gesichert ist.

2. Verfahren zur Detektion eines Lecks nach Anspruch 1, wobei das Gas (G) Wasserstoff ist.

3. Verfahren zur Detektion eines Lecks nach einem der Ansprüche 1 bis 2 in einer Einheit, die eine Vielzahl von Verbindungssystemen (S) aufweist, wobei jedes Verbindungssystem (S) einen Kontrollraum (6) aufweist, wobei die Kontrollräume (6) fluidisch miteinander verbunden sind, um einen globalen Kontrollraum zu bilden.

4. Verfahren zur Detektion eines Lecks nach Anspruch 3, umfassend nur eine Messvorrichtung im globalen Kontrollraum.

5. Verfahren zur Detektion eines Lecks nach einem der Ansprüche 1 bis 3 in einem Verbindungssystem (S), das einen Gasvorratsbehälter (100) und eine mechanische Vorrichtung (101) verbindet.

6. Verfahren zur Detektion eines Lecks nach Anspruch 5 in einem Verbindungssystem (5), das einen Wasserstoff-Vorratsbehälter (100) und eine mechanische Vorrichtung (101) einer Brennstoffzelle verbindet.

7. Verfahren zur Detektion eines Lecks nach Anspruch 6 in einem Verbindungssystem (S), das einen Wasserstoff-Vorratsbehälter (100) und eine mechanische Vorrichtung (101) einer Brennstoffzelle verbindet, die in einem Fluggerät angebracht ist.

## Claims

1. A method for detecting a leak in a connection system (S) comprising:
- a distribution member (1) fluidly connected to a first environment (E1) comprising a gas (G) having a first pressure (P1), the distribution member (1) comprising first connection means (10),
- a reception member (2) in contact with a second environment (E2) having a second pressure (P2) lower than the first pressure (P1) of the gas (G), the reception member (2) comprising second connection means (20) mechanically cooperating with the first connection means (10) of the distribution member (1),
- first sealing means (4) and second sealing means (5) disposed at the interface between the first connection means (10) of the distribution member (1) and the second connection means (20) of the reception member (2) allow for redundant sealed cooperation between the distribution member (1) and the reception member (2),
- a control enclosure (6) defined between the first sealing means (4) and second sealing means (5), the default pressure (Pd) in the control enclosure (6) being lower than the second pressure (P2) of said second environment (E2) and
- means (7) for measuring the current pressure (Pc) in the control enclosure (6) so as to detect a leak of gas (G),
- monitoring means
the method comprising:
- a step of measuring the current pressure (Pc) of the control enclosure (6), and
- the first sealing means (4) being in contact with the first environment (E1), a step of issuing an alarm for leak of the first sealing means (4) if the current pressure (Pc) in the control enclosure (6) is greater than the second pressure (P2) of the second environment (E2), sealing being provided by the second sealing means (5).

2. The method for detecting a leak according to claim 1, wherein the gas (G) is hydrogen.

3. The method for detecting a leak according to one of claims 1 to 2 in an assembly comprising a plurality of connection systems (S), each connection system (S) comprising a control enclosure (6), the control enclosures (6) are fluidly connected to one another in order to form an overall control enclosure.

4. The method for detecting a leak according to claim 3, comprising only one measurement device in the overall control enclosure.

5. The method for detecting a leak according to one of claims 1 to 3 in a connection system (S) connecting a gas tank (100) and a mechanical device (101).

6. The method for detecting a leak according to claim 5 in a connection system (S) connecting a hydrogen tank (100) and a mechanical device (101) of a fuel cell.

7. The method for detecting a leak according to claim 6 in a connection system (S) connecting a hydrogen tank (100) and a mechanical device (101) of a fuel cell mounted in an aircraft.
